# EUROPEAN PATENT SPECIFICATION

(11) **EP 2 999 674 B1**
(45) Date of publication and mention of the grant of the patent: **23.10.2019**
(21) Application number: 14725538.4
(22) Date of filing: 20.05.2014
(51) Int. Cl.: C04B 28/14, B32B 13/12, E04C 2/04

(54) **CONSTRUCTION PANEL HAVING IMPROVED FIXING STRENGTH**
BAUPLATTE MIT VERBESSERTER BEFESTIGUNGSFESTIGKEIT
PANNEAU DE CONSTRUCTION POSSÉDANT UNE RÉSISTANCE DE FIXATION AMÉLIORÉE

(30) Priority: 20.05.2013 GB 201309058
(43) Date of publication of application: 30.03.2016
(60) Divisional application: 19181378.1
(73) Proprietor: Saint-Gobain Placo SAS, 92150 Suresnes (FR)
(72) Inventor: HOTCHIN, Glen, Coventry CV3 2TT (GB); JONES, Nicholas, Coventry CV3 2TT (GB); RICHARDSON, Adam, Coventry CV3 2TT (GB)
(74) Representative: Murgitroyd & Company
(86) International application number: PCT/GB2014/051536
(87) International publication number: WO 2014/188168

(56) References cited:
- EP-A1- 2 743 419
- EP-A2- 0 697 382
- WO-A2-2004/083146
- AU-A- 5 584 480
- CN-A- 101 367 658
- FR-A5- 2 125 733
- JP-A- 2009 299 460
- US-A- 5 477 652
- US-A- 5 922 447
- US-A1- 2004 266 304
- US-A1- 2005 263 925
- US-A1- 2007 059 513
- US-A1- 2008 299 413
- US-A1- 2009 239 429
- US-A1- 2010 075 166
- THOLE V: "FESTIGKEIT UND HAFTEIGENSCHAFTEN VON POLYMERMODIFIZIERTEM GIPSSTEIN", ZKG INTERNATIONAL,, vol. 52, no. 7, 1 January 1999 (1999-01-01), pages 400-409, XP000873998, ISSN: 0949-0205

## Description

The present invention relates to panels for use in building construction. In particular, the present invention relates to panels for providing partitions to which items such as sinks, televisions, or radiators may be affixed.

Light-weight panels such as plasterboard (e.g. gypsum plasterboard), polystyrene board and fibreboard are commonly used to provide partitions within buildings. Their advantages for this application include the fact that they are light and quick to install.

However, in certain cases, such light-weight panels may have the drawback that they are not strong enough to support fixtures (e.g. sinks, televisions, radiators, fire extinguishers, shelves and any other item that requires attachment to the panel). In such cases, the weight of the fixture may cause the fixing means (e.g. screws) to be pulled out of the panel, such that the fixture falls away from the partition.

Typically, this problem has been addressed by providing plywood sheets to increase the fixing strength of the panel. In this case, the plywood sheet is provided on the side of the panel opposite to that on which the fixture is to be located. The plywood sheet may provide increased strength for retaining one or more fixing means (e.g. screws) employed to secure the fixture to the panel. Typically, the plywood sheet is positioned within the partition framework, and the plasterboard then fixed to the plywood, so that it lies outside the partition framework.

As an alternative, metal support means may be provided. These may comprise fixing plates, channels, straps, or metal fasteners. As is the case for plywood sheets, the metal support means are generally positioned on the side of the panel opposite that to which the fixture is to be secured, and act to receive and secure fixing means, e.g. fixing screws, that are used to attach the fixture to the panel.

Both these arrangements have the disadvantage that they require the panels and the additional supporting components to be affixed to each other on-site. Moreover, when metal support means are used, a plurality of such support means may be needed to support the full set of fixing means required to secure the fixture to the panel. Thus, the installation process may be time-consuming and expensive.

Furthermore, the addition of metal support means or plywood sheets increases the weight and thickness of the partition, and/or results in a reduction in cavity wall space. In general, the plywood itself must be cut to size on site, thus increasing the time required for installation and possibly leading to the release of dust and potentially harmful components.

Therefore, there is a need to provide improved panels that are able to retain fixing means and support fixtures, and that do not require time-consuming installation processes.

JP 2009 299460 discloses a plaster based building material providing improved in-plane strength produced without the generation of harmful volatile substances.

US 2009/239429 discloses a panel building material with a facing membrane, a core matrix and a semi-rigid or rigid material attached to the core matrix. US 2009/239429 also discloses that the core matrix can include microspheres having a size between 200 microns and 800 microns, as well as sodium silicate and ethylene vinyl acetate.

It has been found that by providing a panel comprising a substrate board having a polymer-based lamina secured to one of its faces, an improvement in the ability of the panel to retain fixing means may be achieved. However, such panels may be susceptible to screw overtightening, whereby even a small additional rotation of a screw after peak tightening torque has been achieved may result in stripping of the inner surface of the screw hole, with the result that the screw is no longer retained in the panel. As a result, it may be difficult to insert screw fixings into the panel in a reliable and reproducible manner.

It has been found that, in the case where the substrate board is a gypsum plasterboard, this problem may be reduced by selecting a plasterboard that includes at least a fibre additive.

Therefore, in a first aspect, the present invention may provide a panel comprising a plasterboard, the plasterboard having a backing lamina glued to one of the faces thereof, the plasterboard comprising a gypsum matrix having fibres embedded therein, in an amount of at least 1 wt% relative to the gypsum, wherein the lamina has a thickness of at least 1 mm and comprises substantially a material selected from the croup comprising: PVC, HDPE, Nylon, polycarbonate, Bakelite, polypropylene and acetal.

The lamina has a thickness of at least 1 mm. The lamina is glued to the plasterboard, typically by means of a polymer-based glue, such as an acrylic glue.

Preferably, the gypsum matrix further comprises a starch additive in an amount of at least 1 wt% relative to the gypsum, preferably 2 wt%, more preferably 2.5 wt%.

Typically, the fibres are present in an amount of at least 2 wt% relative to the gypsum, preferably 2.5 wt%

In general, the fibres are selected from a group comprising glass fibres, wood fibres, fibres derived from wood, and mixtures thereof. In certain embodiments, however, the fibres may be synthetic polymer fibres.

For example, the fibres may be regenerated cellulose fibres, such as lyocell, that are manufactured from dissolved wood pulp. In this case, the fibres typically have one or more of the following properties:
- an average length that is greater than 0.1 mm, preferably greater than 0.2 mm;
- an average length that is less than 0.5 mm, preferably less than 0.4 mm;
- an average diameter that is less than 20 micron, preferably less than 15 micron.

In certain embodiments, the fibres may be present within the plasterboard in the form of particles of agglomerated fibres, for example, paper particles and/or wood particles (for example, fine sawdust particles). In general, these particles are irregular in shape. The particles typically have one or more of the following properties:
- their maximum dimension is preferably greater than 0.5 mm, preferably greater than 1 mm, more preferably greater than 1.5 mm;
- their maximum dimension is less than 3 mm, preferably less than 2.5 mm;
- the average length of the fibres within the particles is greater than 1 mm;
- the average length of the fibres within the particles is less than 15 mm;
- the average diameter of the fibres within the particles is greater than 1 micron, preferably greater than 5 micron;
- the average diameter of the fibres within the particles is less than 50 micron, preferably less than 30 micron.

The fibres follow a convoluted path such that they are contained within the boundaries of the particle.

In the case that the fibres are glass fibres, the fibres may have one or more of the following properties:
- an average length greater than 10 mm, preferably greater than 15 mm;
- an average length less than 50 mm, preferably less than 30 mm;
- an average diameter greater than 20 micron, preferably greater than 30 micron;
- an average diameter less than 80 micron, preferably less than 70 micron.

Preferably, the starch comprises a non-migratory starch, that is, a starch compound that is retained within the core of the plasterboard and does not migrate to the board surface. Such starches are distinguished from migratory starches, which typically migrate to the surface of the plasterboard and serve the purpose of improving the bonding of the plasterboard core to the paper facing. However, the plasterboard may additionally comprise such migratory starches.

Non-migratory starches may be provided in a number of different ways, as is well-known in the art. For example, the starch may comprise dextrin, as described in US7708847.

In other cases, the starch may be a pre-gelatinised starch.

In certain embodiments, the starch may be selected to have a low viscosity (e.g. a Brookfield viscosity of less than 60 cps) at a temperature of less than 60°C, and a much higher viscosity (e.g. a Brookfield viscosity of over 10000 cps) at a temperature of 70°C. Such starches are described in e.g. US8252110.

These starches have a rheology that is strongly temperature-dependent: it is thought that, at low temperatures, the starch may be dispersed in the core in order to penetrate into the inter-crystalline spaces. As soon as the temperature is above 60°C, the viscosity of the starch increases rapidly up to a very high level to ensure that the starch actually remains in the core and does not migrate to the core/facing interface.

In certain embodiments, the starch is a substituted starch, such as described in US7048794. Substituted starches are starch derivatives that have been chemically reacted to replace one or more of the hydroxyl functional groups.

Typically, the process involves etherification or esterification of a starch or modified starch which appends ether or ester linkages along the starch polymer backbone. This process is distinct from other modifications typically made to starches such as oxidization, acid-thinning, cross-linking, and pre-gelatinisation, although such processes may also be applied to the starch, prior to or after substitution with one or more types of functionalities.

It is thought that substituted starches act as efficient binders for the inorganic phase of plasterboards, e.g. gypsum, thus increasing the core strength of the plasterboard.

Preferably, the starch is insoluble in cold water, but dissolves at a higher processing temperature during forming, setting, or drying of the plasterboard. This is thought to limit excessive migration of the starch, so that it remains in the plasterboard core, to provide a binder for the gypsum crystals.

The substituted starch may comprise hydroxyethylated, hydroxypropylated, and/or acetylated starch. Preferably, the starch is a hydroxyethylated starch.

The starch may be derived from e.g. potato, tapioca, or corn. Preferably, the starch is derived from corn.

The invention will now be described by way of example with reference to the following Figures in which:
Figure 1 is a schematic graph of torque against rotation angle.
Figure 2 is a schematic graph of torque against rotation angle for Example 1 and Comparative Examples 1 and 2.

### Examples 1-3

Gypsum plasterboards were prepared from the compositions described below. A 2mm sheet of PVC was glued to one face of each plasterboard using Aquagrip 29860 glue.

### Example 1

A gypsum plasterboard was prepared from a slurry containing stucco and desulphogypsum (DSG), the DSG being present in an amount of 31 wt% relative to the stucco. The slurry additionally contained the following ingredients:
- ethylated starch in an amount of 2.9 wt% relative to the amount of stucco and DSG (the starch is available from Grain Processing Corporation under the trade name Coatmaster K57F);
- glass fibre in an amount of 3.2 wt% relative to the amount of stucco and DSG.

### Example 2

A gypsum plasterboard was prepared from a slurry containing stucco and desulphogypsum (DSG), the DSG being present in an amount of 31wt% relative to the stucco. The slurry additionally contained the following ingredients:
- glass fibre in an amount of 0.46 wt% relative to the stucco and DSG;
- 0.85 wt% Collofilm 120 starch;
- ethylated starch in an amount of 2.9 wt% relative to the amount of stucco and DSG (the starch is available from Grain Processing Corporation under the trade name Coatmaster K57F);
- Cellulose fibre in an amount of 3.7 wt% relative to the amount of stucco and DSG (the cellulose fibre is available from Lenzing under the trade name Tencel FCP 10/300/M. The fibres have an average length of 0.3 mm, measured via MORFI fibre analysis, and a diameter of 10 micron).

### Example 3

A gypsum plasterboard was prepared from a slurry containing stucco and desulphogypsum (DSG), the DSG being present in an amount of 31 wt% relative to the stucco. The slurry additional contained the following ingredients:
- glass fibre in an amount of 0.46 wt% relative to the stucco and DSG;
- 0.85 wt% Collofilm 120 starch;
- ethylated starch in an amount of 4.4 wt% relative to the amount of stucco and DSG (the starch is available from Grain Processing Corporation under the trade name Coatmaster K57F);
- Cellulose fibre in an amount of 5.5 wt% relative to the amount of stucco and DSG (the cellulose fibre is available from Lenzing under the trade name Tencel FCP 10/300/M. The fibres have an average length of 0.3 mm, measured via MORFI fibre analysis, and a diameter of 10 micron).

### Comparative Example 12

A gypsum plasterboard was prepared from a slurry containing the following ingredients:
- stucco;
- glass fibre in an amount of 4 wt% relative to the stucco, the fibre length being about 6 mm;
- polyvinyl acetate in an amount of 5 wt% relative to the stucco.

### Comparative examples 1-2

Gypsum plasterboards were prepared from the compositions described below. A 2mm sheet of PVC was glued to one face of each plasterboard using Aquagrip 29860 glue.

### Comparative example 1

A gypsum plasterboard was prepared from a slurry containing stucco and desulphogypsum (DSG), the DSG being present in an amount of 31 wt% relative to the stucco. The slurry additionally contained the following ingredients:
- glass fibre in an amount of 0.46 wt% relative to the stucco and DSG;
- 0.85 wt% Collofilm 120 starch.

### Comparative example 2

A gypsum plasterboard was prepared from a slurry containing stucco and desulphogypsum (DSG), the DSG being present in an amount of 31 wt% relative to the stucco. The slurry additionally contained the following ingredients:
- glass fibre in an amount of 0.46 wt% relative to the stucco and DSG;
- 0.85 wt% Collofilm 120 starch;
- ethylated starch in an amount of 2.9 wt% relative to the amount of stucco and DSG (the starch is available from Grain Processing Corporation under the trade name Coatmaster K57F).

### Quantification of resistance to overtightening

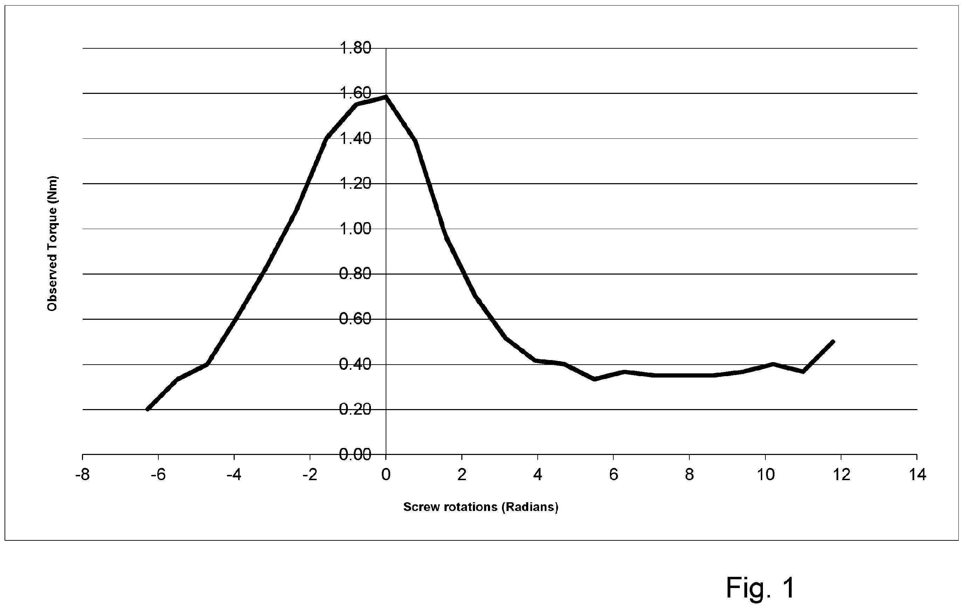

To quantify the resistance to overtightening of the panels of the Examples 1-3 and Comparative Examples 1 and 2, a graph of torque against rotation angle was plotted for a screw being inserted into each panel. The screw was a No. 10 woodscrew having a length of 50 mm and a diameter of 5 mm. An example of such a graph is shown in Figure 1.

The area below the curve was then calculated between the rotation angle of zero (corresponding to peak torque) and 7.85 radians. This area is considered to give an indication of the work done in tightening the screw after peak torque has been attained. It is thought that the greater the work done after peak torque has been attained, the lower the risk of overtightening the screw and stripping material from the inner surface of the screw hole.

The peak torque was also measured for each board. The results are set out in Table 1:

**Table 1**

| **Example** | **Work done (J)** | **Peak torque (Nm)** |
|---|---|---|
| Example 1 | 23.5 | 3.5 |
| Example 2 | 29.7 | 4.6 |
| Example 3 | 32.4 | 4.9 |
| Comparative Example 1 | 18.7 | 3.2 |
| Comparative Example 2 | 21.0 | 3.3 |

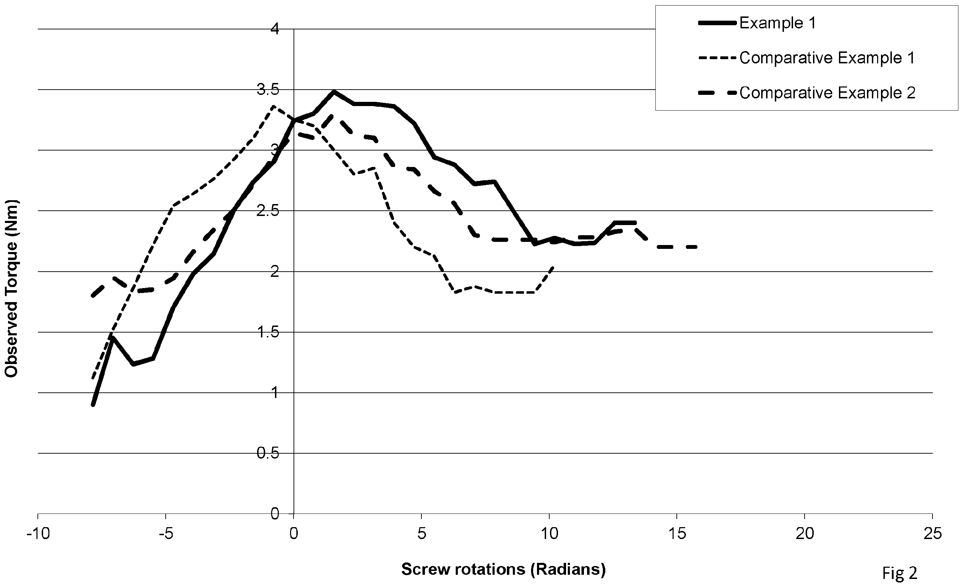

Figure 2 shows a graph of torque against rotation angle for a screw being inserted into a panel according to Example 1 and Comparative Examples 1 and 2 respectively. This shows that the panel of Example 1 retains a higher torque (after peak torque has been attained) than the panels of the Comparative Examples. This is considered to indicate an improved ability of the panel to withstand stripping of a screw hole formed therein.

## Claims

1. A panel comprising a plasterboard, the plasterboard having a backing lamina glued to one of the faces thereof, the plasterboard comprising a gypsum matrix having fibres embedded therein in an amount of at least 1 wt% relative to the gypsum, wherein the lamina has a thickness of at least 1 mm and comprises substantially a material selected from the group comprising: PVC, HDPE, Nylon, polycarbonate, Bakelite, polypropylene and acetal.

2. A panel according to claim 1, wherein the gypsum matrix further comprises a starch additive, the starch additive being present in an amount of at least 1 wt% relative to the gypsum.

3. A panel according to claim 2, wherein the starch additive is present in the gypsum matrix of the plasterboard in an amount of at least 2 wt% relative to the gypsum.

4. A panel according to any one of the preceding claims, wherein the fibres are present in the gypsum matrix of the plasterboard in an amount of at least 2 wt% relative to the gypsum.

5. A panel according to any one of the preceding claims, in which the fibres are selected from a group comprising glass fibres, wood fibres, fibres derived from wood (such as regenerated cellulose fibres), and mixtures thereof.

6. A panel according to claim 5, wherein the fibres are regenerated cellulose fibres and further wherein the average length of the fibres lies in the range 0.1-0.5 mm and / or the average diameter of the fibres is below 20 micron.

7. A panel according to any one of claims 1-6, wherein the fibres are present within the board in the form of particles of agglomerated fibres, such as paper particles or wood particles.

8. A panel according to claim 7, wherein the maximum dimension of the particles is in the range 0.5-3 mm and / or the average length of the fibres within the particles is in the range 1-15 mm and / or the average diameter of the fibres within the particles is in the range 1-50 micron.

9. A panel according to claim 5, wherein the fibres are glass fibres and further wherein the average length of the fibres lies in the range 10-50 mm and / or the average diameter of the fibres lies in the range 5-50 micron.

10. A panel according to claim 5, wherein the fibres are glass fibres and further wherein the average length of the fibres lies in the range 10-50 mm and / or the average diameter of the fibres lies in the range 20-80 micron.

11. A panel according to any one of claims 2-10, wherein the starch is a non-migratory starch.

12. A panel according to claim 11, wherein the starch is selected from the group comprising: dextrin, pre-gelatinised starch, substituted starch, and starch having a Brookfield viscosity of less than 60 cps at a temperature below 60°C and a Brookfield viscosity greater than 10,000 cps at a temperature of 70°C.

13. A panel according to claim 11 or 12, wherein the starch is a substituted starch and the substituent group is an ether substituent group or an ester substituent group.

## Patentansprüche

1. Eine Platte, die eine Gipstafel beinhaltet, wobei die Gipstafel eine Rückenschicht aufweist, die an eine ihrer Stirnflächen geklebt ist, wobei die Gipstafel eine Gipsmatrix beinhaltet, in der Fasern in einer Menge von mindestens 1 Gew.-%, bezogen auf den Gips, eingebettet sind,
wobei die Schicht eine Dicke von mindestens 1 mm aufweist und im Wesentlichen ein Material beinhaltet, das aus der Gruppe, bestehend aus Folgendem, ausgewählt ist: PVC, HDPE, Nylon, Polykarbonat, Bakelit, Polypropylen und Acetal.

2. Platte gemäß Anspruch 1, wobei die Gipsmatrix ferner einen Stärkezusatzstoff beinhaltet, wobei der Stärkezusatzstoff in einer Menge von mindestens 1 Gew.-%, bezogen auf den Gips, vorhanden ist.

3. Platte gemäß Anspruch 2, wobei der Stärkezusatzstoff in der Gipsmatrix der Gipstafel in einer Menge von mindestens 2 Gew.-%, bezogen auf den Gips, vorhanden ist.

4. Platte gemäß einem der vorhergehenden Ansprüche, wobei die Fasern in der Gipsmatrix der Gipstafel in einer Menge von mindestens 2 Gew.-%, bezogen auf den Gips, vorhanden sind.

5. Platte gemäß einem der vorhergehenden Ansprüche, wobei die Fasern aus einer Gruppe ausgewählt sind, die Glasfasern, Holzfasern, von Holz stammende Fasern (wie regenerierte Zellulosefasern) und Mischungen davon beinhaltet.

6. Platte gemäß Anspruch 5, wobei die Fasern regenerierte Zellulosefasern sind und wobei ferner die durchschnittliche Länge der Fasern im Bereich von 0,1-0,5 mm liegt und/oder der durchschnittliche Durchmesser der Fasern unter 20 Mikrometer liegt.

7. Platte gemäß einem der Ansprüche 1-6, wobei die Fasern in der Platte in Form von Teilchen von agglomerierten Fasern wie Papierteilchen oder Holzteilchen vorhanden sind.

8. Platte gemäß Anspruch 7, wobei die maximale Abmessung der Teilchen im Bereich von 0,5-3 mm liegt und/oder die durchschnittliche Länge der Fasern innerhalb der Teilchen im Bereich von 1-15 mm liegt und/oder der durchschnittliche Durchmesser der Fasern in den Teilchen im Bereich von 1-50 Mikrometer liegt.

9. Platte gemäß Anspruch 5, wobei die Fasern Glasfasern sind und wobei ferner die durchschnittliche Länge der Fasern im Bereich von 10-50 mm liegt und/oder der durchschnittliche Durchmesser der Fasern im Bereich von 5-50 Mikrometer liegt.

10. Platte gemäß Anspruch 5, wobei die Fasern Glasfasern sind und wobei ferner die durchschnittliche Länge der Fasern im Bereich von 10-50 mm liegt und/oder der durchschnittliche Durchmesser der Fasern im Bereich von 20-80 Mikrometer liegt.

11. Platte gemäß einem der Ansprüche 2-10, wobei die Stärke eine nichtwandernde Stärke ist.

12. Platte gemäß Anspruch 11, wobei die Stärke aus der Gruppe, die das Folgende beinhaltet, ausgewählt ist: Dextrin, vorgelatinierte Stärke, substituierte Stärke und Stärke mit einer Brookfield-Viskosität von weniger als 60 cps bei einer Temperatur unter 60 °C und einer Brookfield-Viskosität von mehr als 10 000 cps bei einer Temperatur von 70 °C.

13. Platte gemäß Anspruch 11 oder 12, wobei die Stärke eine substituierte Stärke ist und die Substituentengruppe eine Ethersubstituentengruppe oder eine Estersubstituentengruppe ist.

## Revendications

1. Un panneau comprenant une plaque de plâtre, la plaque de plâtre ayant une feuille dorsale collée sur l'une des faces de celle-ci, la plaque de plâtre comprenant une matrice de gypse ayant des fibres incrustées dans celle-ci en une quantité d'au moins 1 % en poids rapporté au gypse,
dans lequel la feuille a une épaisseur d'au moins 1 mm et comprend substantiellement un matériau choisi dans le groupe comprenant : le PVC, le HDPE, le Nylon, le polycarbonate, la Bakélite, le polypropylène et l'acétal.

2. Un panneau selon la revendication 1, dans lequel la matrice de gypse comprend en outre un additif amidon, l'additif amidon étant présent en une quantité d'au moins 1 % en poids rapporté au gypse.

3. Un panneau selon la revendication 2, dans lequel l'additif amidon est présent dans la matrice de gypse de la plaque de plâtre en une quantité d'au moins 2 % en poids rapporté au gypse.

4. Un panneau selon l'une quelconque des revendications précédentes, dans lequel les fibres sont présentes dans la matrice de gypse de la plaque de plâtre en une quantité d'au moins 2 % en poids rapporté au gypse.

5. Un panneau selon l'une quelconque des revendications précédentes, dans lequel les fibres sont choisies dans un groupe comprenant des fibres de verre, des fibres de bois, des fibres dérivées du bois (telles que des fibres de cellulose régénérée), et des mélanges de celles-ci.

6. Un panneau selon la revendication 5, dans lequel les fibres sont des fibres de cellulose régénérée et en outre dans lequel la longueur moyenne des fibres se trouve dans la gamme de 0,1 à 0,5 mm et/ou le diamètre moyen des fibres est inférieur à 20 microns.

7. Un panneau selon l'une quelconque des revendications 1 à 6, dans lequel les fibres sont présentes à l'intérieur de la plaque sous la forme de particules de fibres agglomérées, telles que des particules de papier ou des particules de bois.

8. Un panneau selon la revendication 7, dans lequel la dimension maximale des particules est comprise dans la gamme de 0,5 à 3 mm et/ou la longueur moyenne des fibres à l'intérieur des particules est comprise dans la gamme de 1 à 15 mm et/ou le diamètre moyen des fibres à l'intérieur des particules est compris dans la gamme de 1 à 50 microns.

9. Un panneau selon la revendication 5, dans lequel les fibres sont des fibres de verre et en outre dans lequel la longueur moyenne des fibres se trouve dans la gamme de 10 à 50 mm et/ou le diamètre moyen des fibres se trouve dans la gamme de 5 à 50 microns.

10. Un panneau selon la revendication 5, dans lequel les fibres sont des fibres de verre et en outre dans lequel la longueur moyenne des fibres se trouve dans la gamme de 10 à 50 mm et/ou le diamètre moyen des fibres se trouve dans la gamme de 20 à 80 microns.

11. Un panneau selon l'une quelconque des revendications 2 à 10, dans lequel l'amidon est un amidon non migrateur.

12. Un panneau selon la revendication 11, dans lequel l'amidon est choisi dans le groupe comprenant : la dextrine, l'amidon prégélatinisé, l'amidon substitué, et l'amidon ayant une viscosité de Brookfield de moins de 60 cps à une température inférieure à 60 °C et une viscosité de Brookfield supérieure à 10 000 cps à une température de 70 °C.

13. Un panneau selon la revendication 11 ou la revendication 12, dans lequel l'amidon est un amidon substitué et le groupe substituant est un groupe substituant éther ou un groupe substituant ester.
